# EUROPEAN PATENT SPECIFICATION

(11) **EP 1 477 810 B1**
(45) Date of publication and mention of the grant of the patent: **08.10.2008**
(21) Application number: 04252772.1
(22) Date of filing: 13.05.2004
(51) Int. Cl.: G01N 35/00, G01N 35/02

(54) **Analyzer having concentric rotors**
Analysegerät mit konzentrischen Rotoren
Appareil d'analyse comportant des rotors concentriques

(30) Priority: 13.05.2003 US 436537
(43) Date of publication of application: 17.11.2004
(73) Proprietor: ORTHO-CLINICAL DIAGNOSTICS, INC., Rochester, NY 14626-5101 (US)
(72) Inventor: Tomasso, David Angelo, Rochester, NY 14626 (US); Jakubowicz, Raymond Francis, Rush, NY 14543 (US); Barry, James Vanselow, Rochester, NY 14610 (US)
(74) Representative: Mercer, Christopher Paul

(56) References cited:
- WO-A-97/41445
- US-A- 4 287 155
- US-A- 4 512 952
- US-A- 5 059 393
- US-A- 5 089 418
- US-A- 5 244 633
- US-A1- 2002 098 116

## Description

### BACKGROUND OF THE INVENTION

### Field of the Invention

The present invention relates to an analyzer, having concentric rotors for transporting a component of an analyzer. In particular, the present invention rotates to a desktop analyzer having concentric rotors.

### Description of the Related Art

Desktop analyzers, particularly for veterinary use and point of care (POC) human use, are known in the art. For example, the Abaxis Vetscan™ and Hemagen Analyst™ are both desktop analyzers for veterinary use. The Vitros DT-60 is a desktop analyzer manufactured by Ortho-Clinical Diagnostics Corp. Other known analyzers include those POC analyzers described in U.S. Patent Nos. 5,968.329, 5,747,666, 5,980,830 and 5,787,015. U.S. Patent No. 4,965,0,49 also discloses a modular analyzer system. U.S. Patent No. 5,983,734 discloses a modular automated diagnostic system. U.S. Patent Application Publication No. 2002/0098116 ('116 publication) describes a biochemical analysis system. U.S. Patent No. 4.797,257 describes analyzers and their components that use slides, as test elements. U.S. Patent Nos. 5,741,708, 5,244,633, and 5,736,403 all disclose analyzers having concentric rotors.

Known diagnostic systems, such as those described above, have generally adequately addressed size issues but often at the expense of functionality, test menu, and productivity, or vice versa. Most known systems perform tests serially on a single patient sample, significantly limiting walk away time for the user to perform other work tasks. These analyzers usually employ a number of dedicated subsystems within the analyzer to perform discrete functions such as sample storage and positioning, reagent storage, and waste collection among others. In some cases, multiple analyzer systems are required to perform a variety of test menus needed in the lab, for example, separate systems to perform immuno rate or electrolyte assays.

In many known systems, whole blood samples must be prepared (e.g., diluted or centrifuged) prior to testing, further limiting the users productivity. Reagent formats can be individual test strips (e.g., such as dry-slide technology), which offer the most cost effective solution and test flexibility, or multiple test formats (eg., such as the Abaxis Vetscan rotor), which limit selective assay testing, and, as a result, drive up test costs. Liquid systems may compromise analytical performance when dealing with patient sample background interference compared to analyzers that use a dry-slide format. However, there are some tests which are incompatible with dry formats and therefore must use wet or liquid formats.

There is a need for small, portable *in vitro* diagnostic systems that are capable of automatically performing a wide range of analysis, preferably for both human and animal health care providers, and provide the flexibility to execute a variety of operations on patient samples with a high degree of simplicity and cost effectiveness. There are a number of factors that drive the need for improved products including:
Cost Pressures - Lower cost testing solutions that more effectively utilize system reagents and operation.
Ease of Use - Users at the POC and veterinary labs are often less skilled than most technicians working in large lab operations and often perform a wide range of lab and office functions. Systems utilized in these tabs must be simple to use but offer a high degree of functionality. Systems that are easy to use with little maintenance or preparation of both sample and instrument are advantageous.
increased Test Menu Capability - Systems are needed that can perform a wide range of tests without compromising analytical performance due to test format limitations. Current systems penalize the user due to their inflexibility to accommodate individual and panel tests without additional reagent waste associated with pre-configured test formats (e.g., the Abaxis Vetscan rotor or the Hemagen Analyst Panels+ test rotor).
Size - Lab space is often very limited and portability is often a factor allowing the analyzer to be used at the patient location. US-A-5089418 addresses this by arranging elements concentrically.

In developing such systems that achieve the above factors, there is a need to minimize the number of moving parts to save on costs and minimize space requirements. Know analyzers having concentric rotors (e.g., U.S. Patent Nos. 5,741,708, 5,244,633, and 5,736,403) generally use different transport systems for each subsystem that performs an individual operation. Also, in known analyzers the subsystems themselves sometimes perform movement in several directions to bring the components into registration with the subsystems. The result is expensive and space consuming transport systems that are used to move various components throughout the analyzer.

The features of the present invention that are known from US 2002/098116 have been placed in the preamble of claim 1 appended hereto.

### SUMMARY OF THE INVENTION

One object of the invention is to overcome the disadvantages of the known art described above. Another object of the invention is to provide a desktop analyzer that can perform an array of different analysis within a compact space. Another object of the invention is to provide a transport system for an analyzer that is able to provide substantially all component and/or subsystem transport functions within a single transport subsystem. Yet another object of the invention is to provide a method of transporting a component using a simplified transport system. Yet another object of the invention is to provide a method of analyzing a sample.

The foregoing and further objects of the invention are accomplished according to the invention by an analyzer as defined in claim 1 that includes: a first rotor for holding a test element and at least one of a sample reservoir for a sample to be analyzed, a wash reservoir, and a probe tip dispenser; a second rotor arranged concentrically with the first rotor and adapted to receive the test element from the first rotor; an incubator arranged in cooperation with the second rotor to incubate a sample disposed in the second rotor; and a measurement device arranged to analyze a sample located in the second ring. According to another aspect of the invention as defined in claim 13, there is provided a method of transporting components in an analyzer having a first and second rotor, the second rotor being used to incubate a sample, that includes: rotating a first rotor having a sample in a sample reservoir, at least one test element, and at least one probe tip, to a station for one or more of dispensing, aspirating waste collection, tip pickup, and transfer to the second rotor.

According to still another aspect of the invention there is provided a method of analyzing a sample as defined in claim 14 that includes: providing a sample in a sample reservoir and at least one test element on a first rotor; rotating the first rotor to align the sample reservoir with a liquid dispense and aspirating station; aspirating sample from the sample reservoir; rotating the first rotor to align the test element with the liquid dispense and aspirating station; dispensing the sample onto the test element; rotating the first rotor to align the test element with a test element transfer station; and transferring the test element to a second rotor.

According to yet another aspect of the invention there is provided a liquid transport system for a desktop analyzer that includes; a first rotor for holding a test element and at least one of a sample reservoir for a sample to be analyzed, a wash reservoir, and a probe tip dispenser; and a second rotor arranged concentrically with the first rotor and adapted to receive the test element from the first rotor, wherein only incubation and measurement occurs in the second rotor.

Further objects, features and advantages of the present invention will be apparent to those in the art from detailed consideration of the preferred embodiment that follow.

### BRIEF DESCRIPTION OF THE DRAWINGS

Figure 1 shows a perspective view of a desktop analyzer according to one embodiment of the present invention.
Figure 2 shows a perspective view of a test element holder that includes a probe guide according to one embodiment of the present invention.
Figure 3 shows a plan view of a desktop analyzer with the concentric rotors according to one embodiment of the present invention.
Figure 4 shows an expanded view of the registration of the stationary fluid probe with the probe guide by the outer rotor according to one embodiment of the present invention.
Figure 5 shows a perspective view of an analyzer with the outer and inner concentric rotor according to one embodiment of the invention.

### DETAILED DESCRIPTION OF PREFERRED EMBODIMENTS

The present invention is directed to an *in vitro* analyzer for use in human and animal diagnostics, preferably a desk-top analyzer. The analyzer of the present invention allows for simplified panel testing, e.g., a "chem 7" or "chem 20" panel, with the option to add individual tests as required by the user without generating unnecessary reagent waste or unwanted tests. The device is simple to use and allows the user the opportunity to place multiple patient samples on the device that will automatically process the tests without further intervention by the user.

In order to make such a compact design possible, one aspect of the present invention provides an analyzer that includes movable test elements or a movable fluid, preferably liquid supply that are accessed by relatively non-movable subsystems, such as a sample dispense or aspirating system. An important feature of the invention is the component and subsystem transport system. As used herein, "component" is defined as any object used to manipulate, contain, or modify the sample, consumable or otherwise. "Component" can include test elements, probe tips, sample and other fluid reservoirs. Component also includes saimple and all reagents, including washes and diluents. In the present invention, the transport system is preferably a concentric rotor system. The first rotor, preferably the outer rotor, is used to transport all components or subsystems such as the waste collection container, into proper registration with each other to perform the operations, e.g., sample dispense onto a test element, necessary for analysis. The transport system is also able to provide the motion that would normally be performed by a subsystem, e.g., the fluid supply system, for proper registration of components, etc. By using a single transport system for the majority of, if not all, operations, the number of moving parts and the size of the system can be significantly reduced while maintaining full system functionality, which is critical in smaller analyzers, such as desktop analyzers.

As noted above, the transport system in the present invention is preferably concentric rotors, which are known in the art as described in the patents cited above. In the present invention, the first rotor, preferably the outer rotor, is used to transport components and/or subsystems. The second rotor, preferably the inner rotor is used to incubate samples being analyzed and to align the test element with a measurement device such as a spectrometer.

The transport system can be actuated by drive and control systems well known in the art, such as those described in U.S. Patent No. 4,287,155 and U.S. patent application serial No. 09/904,692 entitled "Tandem Incubator for Clinical Analyzer" filed on July 13, 2001. The first rotor transporting the components can also include features for ensuring proper registration of the components, holders holding the components, e.g., the movable fluid supply described below, or subsystems on the first rotor. For example, the registration features can be in the form of a peg and hole, a spring loaded latch, etc.

The second rotor, preferably the inner rotor, which is used in conjunction with an incubator, generally will only hold the test element, e.g., a slide, that has already had the sample applied or added to it. To move test elements from the first rotor into the second rotor, a test element transfer station or mechanism is preferably provided. In some instances, however, it is envisioned that the test elements could be manually transferred between rotors by an operator. The transfer mechanism may also be used to eject a test element after it has been measured by the spectrometer. In one embodiment, the transfer mechanism has one or more devices known in the art as slide insert mechanisms to move slides from one point to another. They are usually a metal or plastic blade driven by a motor that pushes the slide into position. Similar transfer mechanisms are used on the VITROS® series of analyzers made by Ortho-Clinical Diagnostics, Inc., except that in the present invention a shorter version would be used. In addition, in a preferred embodiment, the present invention will have two slide shuttle mechanisms at a fixed, position facing each other. They will be able to work independently or together to move the slide to any position on the outer or inner rotor for processing. Pubiications disclosing similar transfer mechanisms include U.S. Patent Nos. 5,059,393 and 4,269,803.

the dispensing or aspirating station (i.e., probe) usable in the present invention can include any suitable construction capable of manipulating a fluid in a desired manner, such as those described in U.S. Patent No. 4,965,049. The probe is preferably a nozzle having a proboscis that holds a probe tip. The probe also preferably both aspirates and dispenses fluids. Unlike known probes used in analyzers, the concentric rotors of this present invention do not require the probe to have complicated movements. That is, one embodiment of the present invention also provides a stationary fluid probe. As used herein, "stationary" is defined as the probe being stationary along at least one axis of an x, y and z coordinate system. Preferably, the probe is only movable along a single axis, such as the vertical "z" axis. Movement in the vertical direction allows the probe to access probe tips, samples, waste, etc., which may be at different heights. Thus, with the exception of vertical movement of the probe, all movement is confined to the movable test element, which is transported by the moving rotor. This has the significant advantage over typical known analyzers in that additional cost and complexity that would result from a probe transport system is avoided. That is, a simple control system in one dimension (in this case vertical) is all that is required for the stationary probe, as opposed to a more complex control system required for more degrees of freedom. Thus instead of a complex transport and control systems as used in known analyzer probe transports (i.e., multiple servo motors and controllers being provided) a much simpler transport and control system is all that is required. Further details of the stationary fluid probe can be found in co pending application entitled "Analyzer Having a Stationary Multifunction Probe" filed on March 31, 2003 as Serial. No. 10/403,266, published as US 2004/0191121 A1.

Also, in some embodiments, such as that described below, an additional fluid probe, such as a reference fluid dispensing nozzle, may also be provided. Due to space limitations, it may be desirable to have some movement of the additional probe, such as to move from a fluid source, e.g., a source of reference fluid, to the dispense position over the test element. In such an instance, the movement of the additional probe could be limited to movement in a straight line or a single plane, due to the position of one opening of the probe guide, described below, which would be disposed to receive the additional probe. This would simplify construction by dispensing with the requirement of providing motion and control systems for three dimensional movement. Further details of the additional fluid fixed probe, can be found below and in the co pending application described above entitled "Analyzer Having a Stationary Multifunction Probe."

The test element can be a slide containing the reagents necessary for the analysis, the so-called dry-slide technology as described in U.S. Patent No. 4,797,257 or a cup-shaped well as described in U.S. Patent No. 5,441,896. The test element can also be the so-called test strip chemistry.

A test element holder contains test elements to be dispensed. Typically this would include multiple test elements, however, in some embodiments, such as wells for a wet analysis, it can be envisioned that a single test element may be employed. The holder can also be termed a cassette. The holder includes a body portion for holding at least one test element and a guide adapted to receive a probe to position the probe in a desired registration with the test element. Preferably, the test element holder indudes a recess for holding the test elements and a cover for the test element or other fluid source being acted upon by the probe. Suitable cassettes are described in U.S. Patent Nos. 4,142,863 and 4,512,952.

Located within, the cover is at least one opening, preferably two and more preferably three openings adapted to receive the probe tip. The opening(s) can include a surface that extends away from the opening and at least partially surrounds the opening(s). Preferably, the openings are round and the surface has at least a partially cylindrical shape. The surface can open in an increasing manner in a direction away from the hole toward the probe tip to assist in guiding the probe into registration with the test element. For example, the surface can have the shape of a truncated cone.

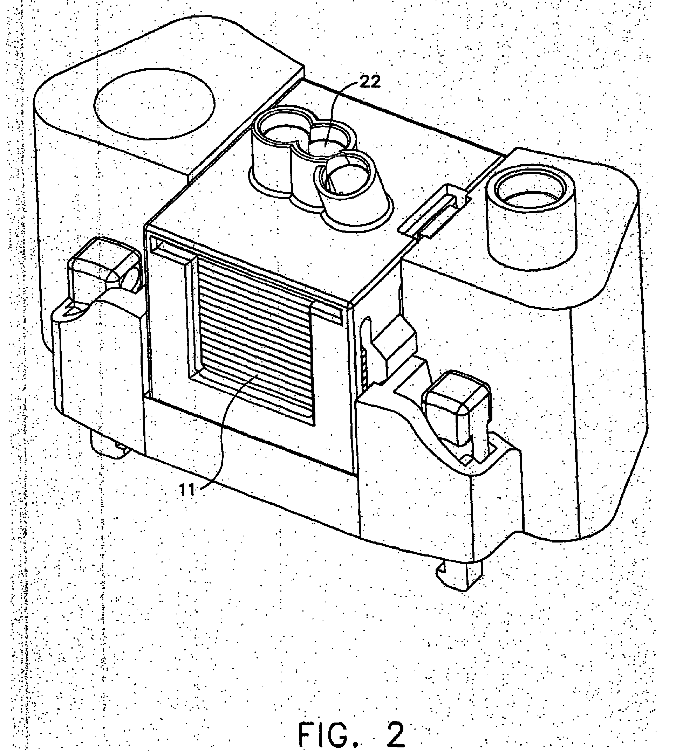

In one embodiment, there are a plurality of openings and one of the openings opens in a direction that is different than the other openings. This can be provided for a variety of reasons. For example, in some embodiments, there may be provided multiple probes, such as one for sample and the other for reference fluids for potentiometric analysis as described above, that are positioned at different angles with respect to the test element or other fluid sources. In this embodiment, the other opening can receive the probe in the same manner as the other opening that have an open perpendicular to the covering of the test element. It should be understood that the description of the plurality of holes above encompasses designs where the holes share common sectors with each other, such that there are no discontinuities between holes. That is, the holes overlap to a certain extent. This is illustrated in Figure 2, This allows the probe tips to be positioned doser to each other than if the probe guide holes were completely separate. Exemplary probe guides can be found in U.S. Patent No. 4,797,257, described above.

The probe guide can be an integral or unitary one-piece construction with the holder, or separate attached structure. In a preferred embodiment, the guide alone or the integral guide and holder are formed from an injection molded plastic. In some embodiments, the test elements may come pre-packaged in a disposable test element holder. In these embodiments, the probe guide may likewise be disposable, preferably recyclable. Of course, if the probe guide is separately attachable to the test element holder, it can be independently disposable. At least periodic disposal is particularly advantageous, because it dispenses with cleaning requirements, reduces the liketihood of carryover between samples and reduces tolerance buildup due to wear. Further details of the test element cartridge and guide can be found in co pending application entitled "Test Element Holder with a Probe Guide for an Analyzer" filed March 31, 2003 as serial No. 10/403,153, published as US 2004/0191923.

In a preferred embodiment, a movable fluid supply of the analyzer that can be removably attached to the first rotor of the analyzer is provided in conjunction with the analyzer. One component such as the test element holder with the probe guide can be included with, and preferably in, the movable fluid supply. In other preferred embodiments, the other components are also included on the movable fluid supply. For example, in a preferred embodiment, the test element holder sits in a recess of the movable fluid supply. The movable fluid supply can also include a probe tip holder or dispenser and a fluid supply section and is preferably of a one-piece construction. The probe tip holder retains a tip that will be used to aspirate the fluid in the fluid supply section. The fluid supply section contains the fluid, such as whole blood, serum plasma, reagent wash fluid, or a diluent to be aspirated and dispensed onto the test element. That is, the fluid supply section can be a sample or reagent reservoir. These can also be recesses in the movable fluid supply. Thus, in one unit, all components of the analyzer that are required to be moved into registration with the probe tip can be included in the fluid supply section on the first rotor.

In another preferred embodiment of the invention, a plurality of test element holders with probe guides are provided. By providing a test element holder with a corresponding probe guide, different test elements, such as potentiometric and colorimetric test elements, or wet and dry and test elements, can be used together on a single analyzer, providing a significant benefit in reducing size and providing optimum flexibility in analysis. Further details of multiple test element holders are described in co pending application described above entitled "Test Element Holder with a Probe Guide for an Analyzer.'' The materials of construction for the analyzer, including the concentric rotors can include all suitable materials known in the art, such as plastic or metal. The disposable items of the analyzer, such as the test elements, test element holder and metering tips are preferably made from environmentally friendly, recyclable materials.

Another aspect of the invention provides a method of transporting components in an analyzer, preferably a desktop analyzer that uses the concentric rotor system desdribed above. An important feature of the present invention is that the first rotor is used to transport the various components, such as the test element, test element holder sample, reagent, etc. or the subsystems, e.g. waste collection container, into registration with each other. The second rotor is preferably only used to incubate and transport the test element to the measurement device (e.g. a spectrometer or electrometer). Another important feature is that the various subsystems, such as the fluid liquid probe have their motion restricted to save on room and expense, Instead, the first rotor performs the necessary motion that the subsystems would have performed. For example, the stationary fluid probe in a preferred embodiment is only capable of motion in the vertical direction. All other motion required for bringing the fluid probe into necessary registration with the test element, etc. is provided by the first rotor.

The present invention also provides a method of analyzing a sample. In one preferred embodiment, the type of analysis or test to be performed on a sample is selected. Based on the test to be performed, one or more movable test elements, corresponding to the test to be performed, are loaded onto the analyzer, preferably in the movable liquid supply. The test elements preferably contain identification indicia or marks, such as a barcode, that can be read by the analyzer to determine the test to be performed and the physical dimensions of the test element. In some instances the analysis to be performed is also inputted into the control, system for the analyzer, preferably through a keyboard of a computer that controls the analyzer.

A sample in a sample reservoir is provided, preferably on the movable fluid supply. The movable fluid supply containing the sample and test elements is loaded onto the analyzer. Depending on the number and type of analysis to be performed, more than one movable fluid supply may be required. Upon activation of the analyzer, the first rotor moves the movable fluid supply into registration with a separation device, such as a centrifugation mechanism (if whole blood), then to a liquid dispense and aspirating station, such as the stationary fluid probe. In some embodiments, a disposable probe tip is pre-loaded onto the movable fluid supply and the proboscis of fluid probe first receives the tip. The proboscis can receive the tip by lowering the proboscis into engagement with the tip or by raising the tip into engagement with the proboscis. The sample, is then moved into registration with the fluid probe and the probe aspirates sample into the tip. After aspirating the sample, the test elements are moved into registration with the fluid probe by rotation of the first rotor. A pre-selected amount of the sample is dispensed from the probe tip onto or into the test element. If necessary, a supply of liquid reagent, such as horseradish peroxide oxidase ("HPO"), can be moved into registration with the stationary fluid probe. The probe aspirates the reagent and retains the reagent until the sample has moved back into registration with the probe, at which point, the reagent is dispensed onto the test element containing the sample.

At this point, if incubation is required, the test element containing the sample, can be incubated. To accomplish this, the test element is transferred to the inner rotor by the test element transfer mechanism and incubated, while the outer reagent rotor continues the function of transporting sample and test elements into registration with the stationary probe. After incubation, the sample can be optionally washed, once again, by moving in supply of liquid wash into registration with the stationary probe. After washing, the sample can be transferred to a spectrometer to have its signal measured. On chemiluminescent applications where a signal reagent is needed, once again, a supply of signal reagent is moved into registration with the probe to be aspirated and then dispensed onto the washed sample. After completion of the analysis, the test element can be disposed of. To accomplish this, the second ring is brought into registration with the waste collection container on the first ring and ejected into the waste collection container with the test element dispense mechanism. Likewise, the outer reagent rotor can rotate the waste container into alignment with the stationary probe and receive the used probe tip(s).

The present invention will now be illustrated in connection with the following detailed preferred embodiment. Of course, the preferred embodiment is intended for illustrative purposes only and is not intended to limit the scope of the invention.

The analyzer includes the concentric rotors. Samples may be whole blood, which may be automatically centrifuged prior to metering, or a variety of other sample types including serum, plasma and urine, among others. The concentric rotors work in concert to process a wide variety of analytical tests with little intervention by the user.

The first, e.g., outer, reagent rotor carries the movable fluid supply(ies) and eliminates the need for multiple system modules and associated complexity since it is capable of storing and processing samples, test elements, liquid reagents, disposables and waste on a single platform. The multifunctional first, outer reagent rotor allows the user to place multiple patient samples on the rotor in addition to individual, assay specific test slides in test cartridges. The movable fluid supply also accepts whole blood samples, which can be automatically centrifuged on the analyzer or prepared samples. The first, outer reagent rotor is also capable of positioning a variety of movable fluid supplies in various formats that allow for auto dilution of samples and expanded test menu capability through the addition of wash fluids for immuno rate assays. The reagent rotor is also capable of accepting a waste collection container to collect the various test slides and metering probe tips. The outer reagent rotor is automatically positioned to intersect a fixed metering system, that includes the fluid probe, used to aspirate and dispense various fluids.

The second inner incubator rotor is used to incubate the test slides followed by positioning at a measurement device such as a spectrometer or electrometer. Test slides are then ejected from the incubator rotor into the waste collection container placed on the outer reagent rotor. The waste collection container is also able to collect other test consumables such as disposable probe tips due to the random access positioning capabitity of the reagent rotor.

All test processing and waste collection is accomplished within the rotors. Additional system features not shown can include an integral printer, user interface keypad/display, electronics and cabinetry all of which are known in the art.

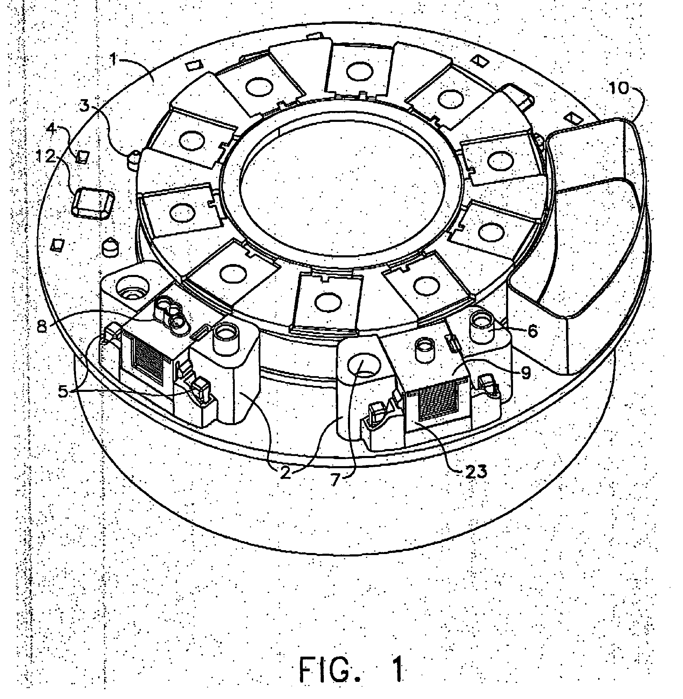

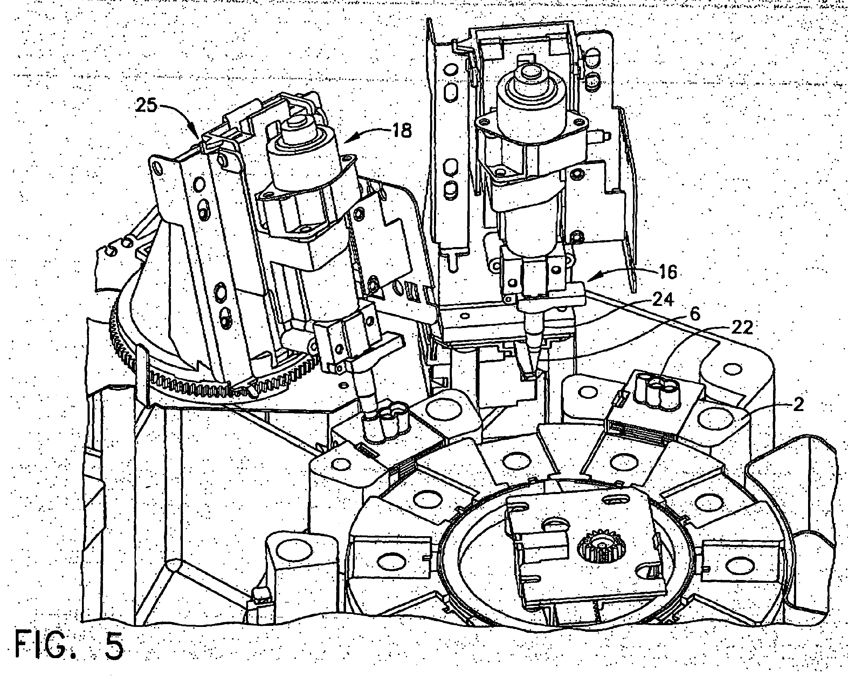

In the embodiment shown in Figure 1, the first reagent rotor (1) orients movable fluid supplies (2) concentric to the rotational axis of the reagent rotor (1). The reagent rotor is rotated about its center axis by a motor with a sensor to determine exact positioning. The movable fluid supplies (2) are reusable and are accurately positioned on the reagent rotor using a locating or registration feature (3), which in this embodiment is a peg that inserts into a hole (not shown) on the underside of the movable fluid supply (2) and anti-rotation feature (4), which in this embodiment is a recess that will accept a pin attached to the end of a spring-loaded latch (5). The movable fluid supplies (2) are held in place on the reagent rotor by spring-loaded latches (5) or other means that allow easy loading and unloading of the movable fluid supplies (2) by the user. A single disposable metering tip (6) is placed in a recess on the top of the fluid supply (2) for access by the metering system 16 (i.e., probe). A patient's sample is placed in a corresponding recess (7) along the same centerline for access by the metering system. A probe guide (8) for metering registration is located on the top of, and in this instance integral with, the holder or cartridge (23) (in this case for test slides) to allow for accurate positioning of the metering probe tip (24, as shown in Figure 5) during sample dispense onto the slides in the cartridge or holder. The probe guide includes cover (9) and one or more holes (22, Figure 2). The reagent rotor will also accept a variety of different cartridges (23) that expand the functionality of the system at the discretion of the user. These may include diluent cartridges for performing sample dilutions, immuno rate wash cartridge for performing a wash step prior to final reading of immuno rate chemistries among other cartridge formats that are possible. A waste collection container (10) is also positioned on the reagent rotor and is positioned to automatically collect used metering tips and slides after testing is complete.

As shown in Figure 2, test slides (11) are loaded into the cartridge (23, Figure 1) prior to processing on the analyzer. The cartridge is capable of accepting a predetermined panel of test slides as well as individual test slides. The test slides (11) are registered up against the inside top surface of the test cartridge directly under the metering registration features by a spring-loaded plunger (12, Figure 1) mounted to the reagent rotor.

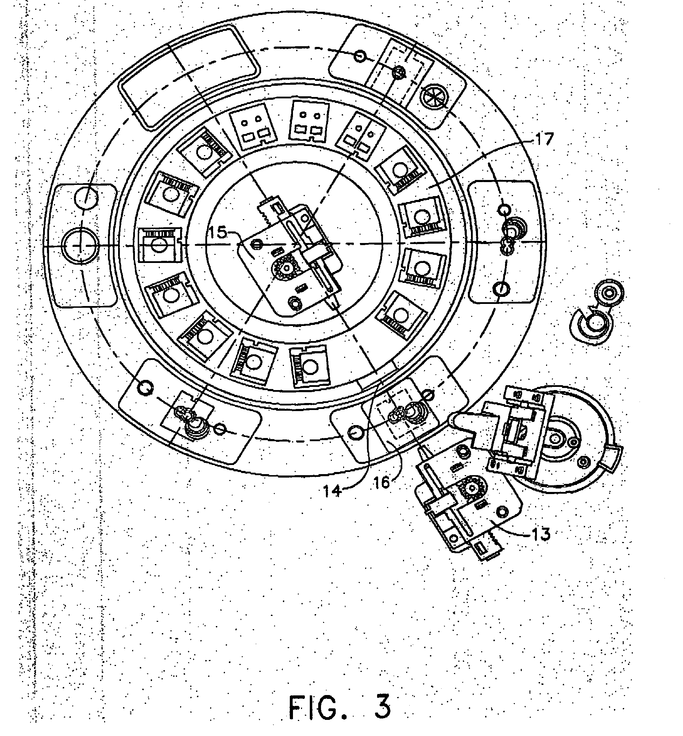

As shown in Figure 3, the reagent rotor (1, Figure 1 ) is automatical positioned to intersect the various components on the slide cartridge with the fixed location of the stationary probe system. The reagent rotor is able to move clockwise and/or counterclockwise to position the cartridges at the metering station for sample dispense and slide positioning. The reagent rotor first positions the cartridge (23) containing the test slides in front of the slide dispense mechanism (13) that will move the slide to a fixed barcode reader positioned (14) between the reagent rotor and the second, incubator rotor (17). The barcade reader reads the unique slide barcode to identify the chemistry type to be tested. A slide insert mechanism (15) reinserts the slide into the test cartridge for processing. The reagent rotor then positions the test cartridge to allow the stationary probe system (16) including tip (24) to access the disposable metering tip followed by sample aspiration from the sample reservoir (7) and then sample dispense on the top slide in the test cartridge. After sample dispensing, the top slide is transferred into the second, incubator rotor (17) by the slide dispense mechanism for incubation. The second, incubator rotor (17) is concentric to the reagent rotor and is rotated about its center axis by a motor with a sensor to determine exact positioning. A spectrometer (not shown) is located below the incubator rotor and is used to measure the slide color change specific to each assay. Immuno rate (IR) chemistries require a wash step prior to final measurement. These slides are inserted into an IR wash cartridge that contains a reusable plastic wash tip and wash fluid supply. The reagent rotor positions the IR wash cartridge at the fixed stationary probe system (16) to perform the necessary wash operation. The IR slide is reinserted into the slide incubator after washing for final measurement. Electrolyte test slides are also measured while on the slide incubator, positioned at the electrometer when measurements are to be made.

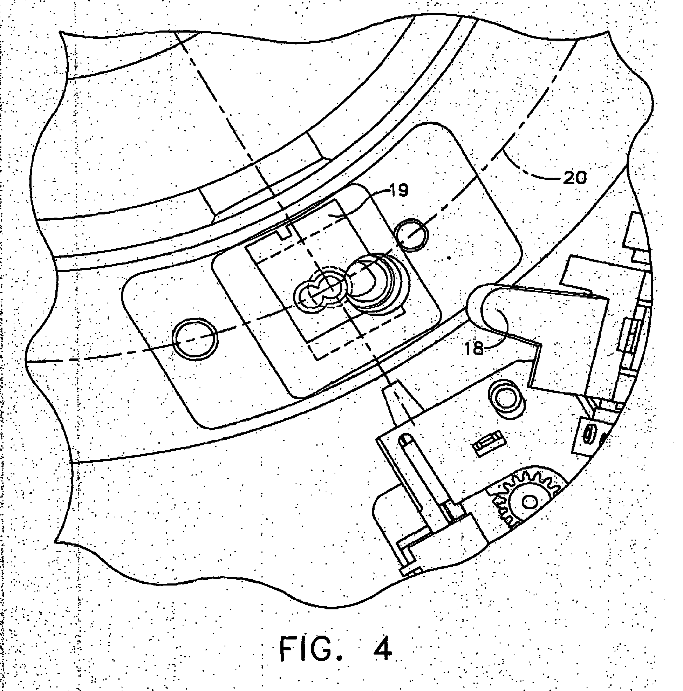

Figures 4 and 5 more closely show an embodiment that uses an additional probe. In this instance, reference metering probe system (18) is a dispensing nozzle that dispenses an electrolyte reference fluid for electrolyte chemistry or potentiometric slides (PM Slides). As shown in Figure 4, the PM slides are processed in a similar manner as the colorimetric (CM) and immuno rate slides. Patient sample and electrolyte reference fluid are dispensed simultaneously on the PM slides (19) while in the test cartridge. In order to eliminate the need for an additional pump movement to intersect the PM slide sample spot, the slide insert mechanism will offset the PM slide slightly. That is, after barcode reading, the slide insert mechanism (15) will push the slide back into the cartridge to a point that aligns the slide underneath the probe guides (8) for metering. The center probe guide is used for sample dispense for CM and immuno rate slides. The left and right probe guides are for sample and reference fluid dispense to PM slides. This allows the CM and PM slides to intersect the common reagent rotor centerline (20). The common reagent centerline (20) allows the stationary probe system (16) and hence the metering probe tip (24) to be in a fixed location while all discrete functional interactions with the reagent rotor (1) are accomplished as the reagent rotor is automatically positioned with the fixed location. As shown in Figure 5, the additional metering system (18) may have an additional degree of freedom of movement around pivot (25) to allow access to the reservoir of reference fluid (26).

In a preferred, embodiment, the analysis sequence is implemented by a computer program interfacing with a computer, that can include a computer usable medium having computer readable program code configured to conduct the analysis.

In another preferred embodiment, the analyzer is a veterinary analyzer that includes a T4 assay.

It will be apparent to those skilled in the art that various modifications and variations can be made to the compounds, compositions and processes of this invention. Thus, it is intended that the present invention cover such modifications and variations, provided they come within the scope of the appended claims and their equivalents.

## Claims

1. An analyzer comprising:
a first rotor (1) for holding a test element holder (23) and at least one of a sample reservoir (7) for a sample to be analyzed, a wash reservoir, and a probe tip dispenser, the test element holder (23) being for holding a test element (11);
a second rotor (17) adapted to receive the test element (11) from the first rotor (1);
an incubator arranged in cooperation with the second rotor (17) to incubate a sample disposed in the second rotor (17); and
a measurement device arranged to analyze a sample located in the second rotor (17);
**characterised in that:**
the second rotor (17) is arranged concentrically with the first rotor (1);
the test element holder and the at least one of the sample reservoir (7), the wash reservoir and the probe tip dispenser are all disposed in a single, moveable, liquid supply (2), the moveable liquid supply (2) being reusable and accurately positioned on the first rotor (1) using a locating or registration feature (3); and
the analyser comprises at least two such moveable liquid supplies (2).

2. An analyzer as claimed in claim 1, further comprising: a liquid dispense or aspirating station arranged to dispense liquid on the first rotor (1).

3. An analyzer as claimed in claim 2, further comprising an additional fluid probe.

4. An analyzer as claimed in claim 3, wherein the additional fluid probe is a dispensing nozzle for dispensing a reference liquid for a potentiometric analysis.

5. An analyzer as claimed in any one of the preceding claims, wherein the first rotor (1) holds a probe tip dispenser and a sample reservoir (7).

6. An analyzer as claimed in any one of the preceding claims, comprising a sample reservoir (7) and a probe tip dispenser located on the first rotor (1).

7. An analyzer as claimed in any one of the preceding claims, wherein the second rotor (17) is disposed within the first rotor (1).

8. An analyzer as claimed in any one of the preceding claims, further comprising a waste collection container (10) located on the first rotor (1) for collecting used probe tips and test elements.

9. An analyzer as claimed in any one of the preceding claims, further comprising spring loaded latches (5) to hold the moveable liquid supplies (2) in place on the first rotor (1).

10. An analyzer as claimed in any one of the preceding claims, wherein the test element holder comprises:
a body portion for holding the test element; and
a guide (8) adapted to receive a probe tip to position the probe tip in a desired registration with a test element.

11. An analyser according to claim 10, wherein the guide (8) comprises a centre probe guide for sample dispense for CM and immuno rate slides and left and right probe guides for sample and reference fluid dispense to PM slides to allow the CM and PM slides to intersect a common rotor centerline (20).

12. An analyzer according to any one of the preceding claims, wherein the analyzer is a desktop analyzer.

13. A method of transporting components in an analyzer according to any one of the preceding claims, comprising:
rotating the first rotor (1), having a sample in a sample reservoir, at least one test element, and at least one probe tip, to a station for one or more of dispensing, aspirating waste collection, tip pickup, and transfer to the second rotor (17).

14. A method of analyzing a sample in an analyser according to any one of claims 1 to 12, comprising:
providing a sample in a sample reservoir and at least one test element on the first rotor (1);
rotating the first rotor (1) to align the sample reservoir with a liquid dispense and aspirating station;
aspirating sample from the sample reservoir;
rotating the first rotor (1) to align the test element with the liquid dispense and aspirating station;
dispensing the sample onto the test element;
rotating the first rotor (1) to align the test element with a test element transfer station; and
transferring the test element to the second rotor (17).

15. A method of analyzing a sample as claimed in claim 14, further comprising incubating the test element.

16. A method of analyzing a sample as claimed in claim 15, further comprising:
rotating the second rotor (17) to bring the test element into cooperation with a measurement device; and
measuring the sample with the measurement device.

17. A method of analyzing a sample as claimed in any one of claims 14 to 16, further comprising:
providing a tip for the liquid dispense and aspirating station on the first rotor (1); and
rotating the first rotor (1) to align the tip with the liquid dispense and aspirating station; and
inserting the tip onto a proboscis of the liquid dispense and aspirating station.

18. A method of analyzing as claimed in claim 17, wherein the tip is inserted onto the proboscis by lowering the proboscis into engagement with the tip.

19. A method of analyzing as claimed in claim 17, wherein the tip is inserted onto the proboscis by raising the tip into engagement with the proboscis.

20. An method as claimed in any one of claims 17 to 19, wherein the proboscis comprises an aspirating and/or dispensing nozzle.

21. A method according to any one of claims 14 to 20, wherein the test to be performed is a colorimetric analysis and the test element is a dry-slide test element.

22. A method according to any one of claims 14 to 20, wherein the test to be performed is an immuno rate analysis and the test element is a cup-shaped well.

23. A method according to any one of claims 14 to 22 implemented by a computer program interfacing with a computer.

24. An article of manufacture comprising a computer usable medium having computer readable program code configured to conduct the method of any one of claims 14 to 23.

## Patentansprüche

1. Analysegerät, umfassend:
einen ersten Rotor (1) zum Halten eines Testelementhalters (23) und eines Probenbehälters (7) für eine zu analysierende Probe und/oder eines Waschflüssigkeitsbehälters und/oder eines Sondenspitzengebers, wobei der Testelementhalter (23) zum Halten eines Testelements (11) dient;
einen zweiten Rotor (17), der zur Aufnahme des Testelements (11) vom ersten Rotor (1) gestaltet ist;
einen Inkubator, der in Zusammenwirkung mit dem zweiten Rotor (17) zum Inkubieren einer in dem zweiten Rotor (17) angeordneten Probe gestaltet ist; und
eine Messeinrichtung, die zum Analysieren einer in dem zweiten Rotor (17) angeordneten Probe gestaltet ist,
**dadurch gekennzeichnet, dass**
der zweite Rotor (17) konzentrisch zum ersten Rotor (1) angeordnet ist;
der Testelementhalter und der Probenbehälter (7) und/oder der Waschflüssigkeitsbehälter und/oder der Sondenspitzengeber sämtlich in einer einzigen, bewegbaren Flüssigkeitszuführung (2) angeordnet sind, wobei die bewegbare Flüssigkeitszuführung (2) wieder verwendbar und auf dem ersten Rotor (1) unter Verwendung einer Lagerungs- oder Ausrichteinrichtung (3) genau positionierbar ist; und
das Analysegerät mindestens zwei derartige bewegbare Flüssigkeitszuführungen (2) aufweist.

2. Analysegerät nach Anspruch 1, ferner umfassend eine Flüssigkeitsabgabe- oder -ansaugstation, die zum Abgeben von Flüssigkeit auf den ersten Rotor (1) gestaltet ist.

3. Analysegerät nach Anspruch 2, ferner umfassend eine zusätzliche Fluidsonde.

4. Analysegerät nach Anspruch 3, **dadurch gekennzeichnet, dass** die zusätzliche Fluidsonde eine Abgabedüse zum Abgeben einer Referenzflüssigkeit für eine potentiometrische Analyse ist.

5. Analysegerät nach einem der vorangehenden Ansprüche, **dadurch gekennzeichnet, dass** der erste Rotor (1) einen Sondenspitzengeber und einen Probenbehälter (7) hält.

6. Analysegerät nach einem der vorangehenden Ansprüche, umfassend einen Probenbehälter (7) und Sondenspitzengeber, die sich auf dem ersten Rotor (1) befinden.

7. Analysegerät nach einem der vorangehenden Ansprüche, **dadurch gekennzeichnet, dass** der zweite Rotor (17) in dem ersten Rotor (1) angeordnet ist.

8. Analysegerät nach einem der vorangehenden Ansprüche, ferner umfassend einen Abfallsammelbehälter (10), der sich auf dem ersten Rotor (1) zum Sammeln von gebrauchten Sondenspitzen und Testelementen befindet.

9. Analysegerät nach einem der vorangehenden Ansprüche, ferner umfassend federbelastete Klinken (5), um die bewegbaren Flüssigkeitszuführungen (2) an deren Plätzen auf dem ersten Rotor (1) zu erhalten.

10. Analysegerät nach einem der vorangehenden Ansprüche, **dadurch gekennzeichnet, dass** der Testelementhalter umfasst:
einen Körperabschnitt zum Halten des Testelements; und
eine Führung (8) zum Aufnehmen einer Sondenspitze und Positionieren der Sondenspitze in einer gewünschten Ausrichtung mit einem Testelement.

11. Analysegerät nach Anspruch 10, **dadurch gekennzeichnet, dass** die Führung (8) eine mittige Sondenführung zur Probenabgabe für CM und Immuno-Rate-Objektträger und linke und rechte Sondenführungen zur Proben- und Referenzfluidabgabe auf PM-Objektträger aufweist, damit die CM- und PM-Objektträger eine gemeinsame Rotormittellinie (20) schneiden können.

12. Analysegerät nach einem der vorangehenden Ansprüche, **dadurch gekennzeichnet, dass** das Analysegerät ein Tischanalysegerät ist.

13. Verfahren zum Transportieren von Komponenten in einem Analysegerät nach einem der vorangehenden Ansprüche, umfassend:
Drehen des ersten Rotors (1), der eine Probe in einem Probenbehälter, mindestens ein Testelement und mindestens eine Sondenspitze aufweist, zu einer Station zum Abgeben und/oder Ansaugen von Abfallansammlung, Spitzenaufnahme und Übertragen auf den zweiten Rotor (17).

14. Verfahren zum Analysieren einer Probe in einem Analysegerät nach einem der Ansprüche 1 bis 12 umfassend:
Bereitstellen einer Proben in einem Probenbehälter und mindestens eines Testelements auf dem ersten Rotor (1);
Drehen des ersten Rotors (1), um den Probenbehälter mit einer Flüssigkeitsabgabe- und -ansaugstation auszurichten;
Ansaugen von Probe aus dem Probenbehälter;
Drehen des ersten Rotors (1), um das Testelement mit der Flüssigkeitsabgabe- und -ansaugstation auszurichten;
Abgeben der Probe auf das Testelement;
Drehen des ersten Rotors (1), um das Testelement mit einer Testelementübergabestation auszurichten; und
Übergeben des Testelements an den zweiten Rotor (17).

15. Verfahren zum Analysieren einer Probe nach Anspruch 14, ferner umfassend Inkubieren des Testelements.

16. Verfahren zum Analysieren einer Probe nach Anspruch 15, ferner umfassend:
Drehen des zweiten Rotors (17), um das Testelement in Zusammenwirkung mit einer Messeinrichtung zu bringen; und
Messen der Probe mit der Messeinrichtung.

17. Verfahren zum Analysieren einer Probe nach einem der Ansprüche 14 bis 16, ferner umfassend:
Bereitstellen einer Spitze für die Flüssigkeitsabgabe- und -ansaugstation auf dem ersten Rotor (1); und
Drehen des ersten Rotors (1), um die Spitze mit der Flüssigkeitsabgabe- und -ansaugstation auszurichten;
Einsetzen der Spitze auf den Rüssel der Flüssigkeitsabgabe- und -ansaugstation.

18. Verfahren zum Analysieren nach Anspruch 16, **dadurch gekennzeichnet, dass** die Spitze auf den Rüssel durch Absenken des Rüssels in Eingriff mit der Spitze eingesetzt wird.

19. Verfahren zum Analysieren nach Anspruch 17, **dadurch gekennzeichnet, dass** die Spitze auf den Rüssel durch Anheben der Spitze in Eingriff mit dem Rüssel eingesetzt wird.

20. Verfahren nach einem der Ansprüche 17 bis 19, **dadurch gekennzeichnet, dass** der Rüssel eine Ansaug- und/oder Abgabedüse aufweist.

21. Verfahren nach einem der Ansprüche 14 bis 20, **dadurch gekennzeichnet, dass** der durchzuführende Test eine kolorimetrische Analyse ist und das Testelement ein Dry-Slide-Testelement ist.

22. Verfahren nach einem der Ansprüche 14 bis 20, **dadurch gekennzeichnet, dass** der durchzuführende Test eine Immuno-Rate-Analyse ist und das Testelement ein becherförmiges Well ist.

23. Verfahren nach einem der Ansprüche 14 bis 22, implementiert durch ein Computerprogramm, das mit einem Computer gekoppelt ist.

24. Gegenstand, umfassend ein von einem Computer verwendbares Medium mit computerlesbarem Programmcode zur Durchführung des Verfahrens nach einem der Ansprüche 14 bis 23.

## Revendications

1. Analyseur comprenant :
◆ un premier rotor (1) pour retenir un support d'élément d'essai (23) et au moins un élément parmi un réservoir à échantillon (7) pour un échantillon à analyser, un réservoir de lavage, et un distributeur de pointes de sonde, le support d'élément d'essai (23) étant conçu pour supporter un élément d'essai (11) ;
◆ un second rotor (17) adapté pour recevoir l'élément d'essai (11) à partir du premier rotor (1) ;
◆ une incubateur agencé en coopération avec le second rotor (17) afin d'incuber un échantillon disposé dans le second rotor (17) ; et
◆ un dispositif de mesure agencé de sorte à analyser un échantillon situé dans le second rotor (17),
**caractérisé en ce que :**
◆ le second rotor (17) est agencé concentriquemént par rapport au premier rotor (1) ;
◆ le support d'élément d'essai et l'au moins un élément parmi le réservoir à échantillon (7), le réservoir de lavage et le distributeur de pointes de sonde sont tous disposés dans un dispositif unique, mobile, d'alimentation en liquide (2), le dispositif mobile d'alimentation en liquide (2) étant réutilisable et positionné de manière exacte sur le premier rotor (1) en utilisant une caractéristique de positionnement ou d'ajustement (3) ; et
◆ l'analyseur comprend au moins deux dispositifs mobiles d'alimentation en liquide (2) de ce type.

2. Analyseur selon la revendication 1, comprenant en outre : un poste de distribution ou d'aspiration de liquide agencé de manière à distribuer du liquide sur le premier rotor (1).

3. Analyseur selon la revendication 2, comprenant en outre une sonde à fluide supplémentaire.

4. Analyseur selon la revendication 3, dans lequel la sonde à fluide supplémentaire est un bec de distribution pour distribuer un liquide de référence pour une analyse potentiométrique.

5. Analyseur selon l'une quelconque des revendications précédentes, dans lequel le premier rotor (1) supporte un distributeur de pointes de sonde et un réservoir à échantillon (7).

6. Analyseur selon l'une quelconque des revendications précédentes, comprenant un réservoir à échantillons (7) et un distributeur de pointes de sonde positionné sur le premier rotor (1).

7. Analyseur selon l'une quelconque des revendications précédentes, dans lequel le second rotor (17) est disposé à l'intérieur du premier rotor (1).

8. Analyseur selon l'une quelconque des revendications précédentes, comprenant en outre un récipient de collecte de déchets (10) positionné sur le premier rotor (1) pour recueillir les pointes de sonde et les éléments d'essai usagés.

9. Analyseur selon l'une quelconque des revendications précédentes, comprenant en outre des verrous à ressort (5) pour retenir en place sur le premier rotor (1) les dispositifs mobiles d'alimentation en liquide (2).

10. Analyseur selon l'une quelconque des revendications précédentes, dans lequel le support d'élément d'essai comprend :
◆ une partie formant corps conçue pour retenir l'élément d'essai ; et
◆ un guide (8) adapté pour recevoir une pointe de sonde afin de positionner la pointe de sonde dans une position ajustée voulue par rapport à un élément d'essai.

11. Analyseur selon la revendication 10, dans lequel le guide (8) comprend un guide de sonde central pour distribuer des échantillons pour des lames d'essai colorimétrique (CM) et de dosage immunologique, ainsi que des guides de sonde droit et gauche pour une distribution de fluide d'échantillon et de référence à des lames d'essai potentiométrique (PM) pour permettre aux lames d'essai CM et PM de croiser une ligne centrale commune de rotor (20).

12. Analyseur selon l'une quelconque des revendications précédentes, dans lequel l'analyseur est un analyseur de bureau.

13. Méthode de transport de composants dans un analyseur selon l'une quelconque des revendications précédentes, comprenant l'étape consistant à :
entraîner en rotation le premier rotor (1) comprenant un échantillon dans un réservoir à échantillon, au moins un élément d'essai, et au moins une pointe de sonde, vers un poste ayant une ou plusieurs fonctions parmi la distribution, l'aspiration de déchets recueillis, le prélèvement de pointes, et le transfert vers le second rotor (17).

14. Méthode d'analyse d'un échantillon dans un analyseur selon l'une quelconque des revendications 1 à 12, comprenant les étapes consistant à :
◆ fournir un échantillon à un réservoir à échantillon et au moins un élément d'essai sur le premier rotor (1) ;
◆ entraîner en rotation le premier rotor (1) pour aligner le réservoir à échantillon avec un poste de distribution et d'aspiration de liquides ;
◆ aspirer de l'échantillon à partir du réservoir à échantillon ;
◆ entraîner en rotation le premier rotor(1) pour aligner l'élément d'essai avec le poste de distribution et d'aspiration de liquides ;
◆ distribuer l'échantillon sur l'élément d'essai ;
◆ entraîner en rotation le premier rotor(1) pour aligner l'élément d'essai avec un poste de transfert d'élément d'essai ; et
◆ transférer l'élément d'essai sur le second rotor (17).

15. Méthode d'analyse d'un échantillon selon la revendication 14, comprenant en outre l'étape consistant à incuber l'élément d'essai.

16. Méthode d'analyse d'un échantillon selon la revendication 15, comprenant en outre les étapes consistant à :
◆ entraîner en rotation le second rotor (17) pour amener l'élément d'essai à coopérer avec un dispositif de mesure ; et
◆ mesurer l'échantillon avec le dispositif de mesure.

17. Méthode d'analyse d'un échantillon selon l'une quelconque des revendications 14 à 16, comprenant en outre les étapes consistant à :
◆ fournir une pointe pour le poste de distribution et d'aspiration de liquides sur le premier rotor (1) ; et
◆ entraîner en rotation le premier rotor (1) pour aligner la pointe avec le poste de distribution et d'aspiration de liquides ; et
◆ insérer la pointe sur une trompe du poste de distribution et d'aspiration de liquides.

18. Méthode d'analyse selon la revendication 17, dans lequel la pointe est insérée sur la trompe en abaissant la trompe pour la mettre en prise avec la pointe.

19. Méthode d'analyse selon la revendication 17, dans laquelle la pointe est insérée sur la trompe en élevant la pointe pour la mettre en prise avec la trompe.

20. Méthode selon l'une quelconque des revendications 17 à 19, dans laquelle la trompe comprend un bec d'aspiration et/ou de distribution.

21. Méthode selon l'une quelconque des revendications 14 à 20, dans laquelle l'essai à effectuer est une analyse colorimétrique et l'élément d'essai est un élément d'essai à lame sèche.

22. Méthode selon l'une quelconque des revendications 14 à 20, dans laquelle l'essai à effectuer est une analyse de dosage immunologique et l'élément d'essai est un puits en forme de coupelle.

23. Méthode selon l'une quelconque des revendications 14 à 22, mise en oeuvre par un programme informatique interfacé avec un ordinateur.

24. Article de fabrication comprenant un support utilisable par ordinateur ayant un code de programme lisible par ordinateur configuré pour mettre en oeuvre la méthode selon l'une quelconque des revendications 14 à 23.
